# EUROPEAN PATENT APPLICATION

(11) **EP 4 797 192 A1**
(43) Date of publication of application: **26.08.2026**
(21) Application number: 25875556.0
(22) Date of filing: 03.09.2025
(51) Int. Cl.: G06Q 50/04, H01M 10/04, G06Q 10/06, B65H 19/12

(54) **SECONDARY BATTERY MANUFACTURING SYSTEM AND METHOD FOR MANUFACTURING SECONDARY BATTERY**

(30) Priority: 02.10.2024 KR 20240134135
(71) Applicant: LG Energy Solution, Ltd., Seoul 07335 (KR)
(72) Inventor: HYUN, Woo Bin, Daejeon 34122 (KR); LEE, Jong Hun, Daejeon 34122 (KR); KWON, Young Seong, Daejeon 34122 (KR); LEE, Seo Jun, Daejeon 34122 (KR); KIM, Da Woon, Daejeon 34122 (KR)
(74) Representative: Plasseraud IP
(86) International application number: PCT/KR2025/013618
(87) International publication number: WO 2026/075379

(57) **Abstract**

A method for manufacturing a secondary battery is provided. The method includes: collecting supply history data and manufacturing history data; and analyzing the supply history data and the manufacturing history data, wherein the manufacturing history data indicates a state of main equipment configured to perform a manufacturing process, and the supply history data indicates a state of a supply part configured to supply electrode rolls to the main equipment.

## Description

### [Technical Field]

The present disclosure relates to a secondary battery manufacturing system and a method for manufacturing a secondary battery.

This application claims the benefit of Korean Patent Application No. 10-2024-0134135, filed on October 2, 2024, the disclosure of which is incorporated herein by reference.

### [Background]

Unlike primary batteries, secondary batteries can be charged and discharged a plurality of times. Secondary batteries are widely used as energy sources for various wireless devices such as handsets, laptops, and wireless vacuum cleaners. Recently, due to improved energy density and economies of scale, the manufacturing cost per unit capacity of secondary batteries has dramatically decreased, and the driving range of BEVs (battery electric vehicles) has increased to a level equivalent to fuel vehicles, thereby shifting the main application of secondary batteries from mobile devices to mobility.

Secondary batteries are manufactured through electrode processes, assembly processes, and activation processes. Among these, the electrode process is the most critical process in determining the yield and performance of battery cells. The electrode process may include a coating process, a roll press process, and a slitting process. In the coating process, active materials and insulating materials may be applied to the surface of a current collector. In the roll press process, electrodes may be pressed by pressing rolls. The roll press process can determine the density, performance, and surface quality of electrodes. In the slitting process, electrodes may be cut into a plurality of electrodes according to the battery cell design.

### [Summary]

### [Technical Problem]

The problem to be solved by the technical idea of the present disclosure is to provide a secondary battery manufacturing system with improved capability to identify factors causing equipment operation losses.

### [Technical Solution]

According to exemplary embodiments of the present disclosure to solve the above problem, a method for manufacturing a secondary battery is provided. The method includes: a step of collecting supply history data and manufacturing history data; and a step of analyzing the supply history data and the manufacturing history data, wherein the manufacturing history data indicates a state of main equipment configured to perform a manufacturing process, and the supply history data indicates a state of a supply part configured to supply electrode rolls to the main equipment.

The step of analyzing the supply history data and the manufacturing history data includes determining a portion of the supply history data that temporally matches idle time of the manufacturing history data.

The step of analyzing the supply history data and the manufacturing history data includes determining an occupancy rate by loss code of the manufacturing history data temporally matched to idle time of the manufacturing history data.

The occupancy rate is calculated as a ratio to total idle time of the manufacturing history data.

According to exemplary embodiments, a secondary battery manufacturing system is provided. The system includes: a secondary battery manufacturing equipment; an automated logistics system configured to deliver electrode rolls to the secondary battery manufacturing equipment; and a server, wherein the secondary battery manufacturing equipment includes a supply part configured to process the electrode rolls and to supply the electrode rolls delivered by the main equipment and the automated logistics system, wherein the main equipment includes a process controller configured to collect manufacturing history data indicating a state of the main equipment and to transmit the manufacturing history data to the server, wherein the supply part includes a supply controller configured to collect supply history data indicating a state of the main equipment and to transmit the supply history data to the server.

The supply part includes a first shuttle comprising a first unwinder, a second shuttle comprising a second unwinder, and a hoist configured to lift the electrode roll from the automated logistics system and load the electrode roll onto one of the first and second unwinders.

The supply controller is configured to control the first shuttle, the second shuttle, and the hoist.

The server is a Manufacturing Execution System MES.

The server is configured to store the supply history data and the manufacturing history data.

The server is configured to analyze the supply history data and the manufacturing history data.

Analyzing the supply history data and the manufacturing history data includes determining a portion of the supply history data that temporally matches idle time of the manufacturing history data.

Analyzing the supply history data and the manufacturing history data includes determining an occupancy rate by loss code of the manufacturing history data temporally matched to idle time of the manufacturing history data.

The occupancy rate is calculated as a ratio to total idle time of the manufacturing history data.

### [Advantageous Effects]

According to exemplary embodiments of the present disclosure, when equipment operation rate degradation occurs in a secondary battery manufacturing system, it is possible to identify which element among main process equipment, electrode automatic supply part, and automated logistics system caused the operation rate degradation. Accordingly, by promptly resolving factors causing equipment operation rate loss, the reliability and yield of secondary battery manufacturing can be improved.

The effects that may be obtained from the exemplary embodiments of the present disclosure are not limited to those mentioned above, and other effects not mentioned may be clearly derived and understood by one of ordinary skill in the art to which the exemplary embodiments of the present disclosure belong from the following description. That is, unintended effects of practicing the exemplary embodiments of the present disclosure may also be derived from the exemplary embodiments of the present disclosure by one of ordinary skill in the art.

### [Brief Description of the Drawings]

FIG. 1 illustrates a secondary battery manufacturing system according to exemplary embodiments.
FIG. 2 illustrates a secondary battery manufacturing system according to exemplary embodiments.
FIG. 3 illustrates an exemplary logistics event scenario including temporally aligned logistics events while main equipment is in a standby state.
FIG. 4 illustrates supply history data temporally matched to and temporally aligned with an idle portion of manufacturing history data.
FIG. 5 is a flowchart illustrating a method for manufacturing a secondary battery according to exemplary embodiments.

### [Best Mode for Carrying out the Invention]

Hereinafter, preferred embodiments of the present disclosure will be described in detail with reference to the accompanying drawings. It should be noted that the terms and words used in this specification and claims are not to be construed in their ordinary or dictionary sense, but rather in a sense and concept consistent with the technical idea of the disclosure, based on the principle that the inventor may define the concept of a term as he sees fit to best explain his disclosure.

Accordingly, it is to be understood that the embodiments described herein and the configurations shown in the drawings are only the most preferred embodiments of the disclosure and do not represent all of the technical ideas of the disclosure, and that there may be various equivalents and modifications that may be substituted for them at the time of filing the present application.

Furthermore, in describing the disclosure, specific descriptions of relevant disclosed configurations or features are omitted where it is believed that such detailed description would obscure the essence of the disclosure.

Because the embodiments of the present disclosure are provided to more fully illustrate the disclosure to those of ordinary skill in the art, the shapes and sizes of the components in the drawings may be exaggerated, omitted, or shown schematically for clarity. Accordingly, the size or proportion of each component is not necessarily indicative of its actual size or proportion.

### (First embodiment)

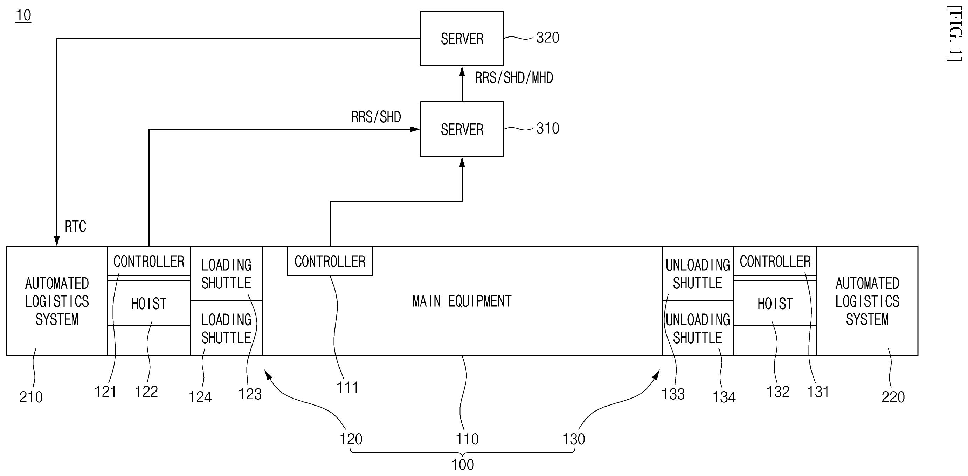

FIG. 1 illustrates a secondary battery manufacturing system 10 according to exemplary embodiments.

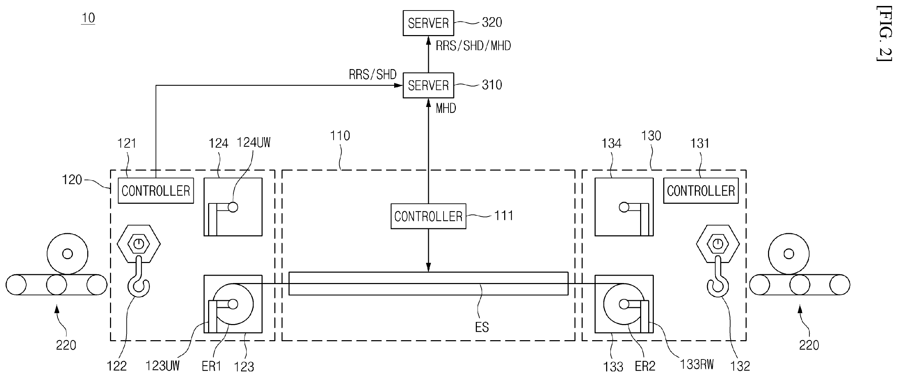

FIG. 2 illustrates a secondary battery manufacturing system 10 according to exemplary embodiments.

Referring to FIGS. 1 and 2, the secondary battery manufacturing system 10 may include secondary battery manufacturing equipment 100, automated logistics systems 210 and 220, and servers 310, 320.

According to exemplary embodiments, the secondary battery manufacturing equipment 100 may be configured to perform a secondary battery manufacturing process. Hereinafter, according to exemplary embodiments, the technical idea of the present disclosure will be described focusing on an example in which the secondary battery manufacturing equipment 100 performs a notching process. Those skilled in the art will be able to easily arrive at an embodiment in which the secondary battery manufacturing equipment performs any one of a coating process, a roll press process, and a slitting process based on what is described herein.

The secondary battery manufacturing equipment 100 may be configured to perform a roll-to-roll process. The automated logistics system 210 may be configured to supply the secondary battery manufacturing equipment 100 with electrode rolls ER1 completed in a previous process.

The secondary battery manufacturing equipment 100 may include main equipment 110, a supply part 120, and a discharge part 130. The main equipment 110 may include a controller 111. The supply part 120 may include a controller 121, a hoist 122, a first shuttle 123, and a second shuttle 124. The discharge part 130 may include a controller 131, a hoist 132, a first shuttle 133, and a second shuttle 134.

The electrode roll ER1 may be loaded onto the first and second shuttles 123 and 124 by the hoist 122. The hoist 122 may be configured to lift the electrode roll ER1 delivered by the automated logistics system 210 and load the electrode roll ER1 onto one of the first unwinder 123UW of the first shuttle 123 and the second unwinder 124UW of the second shuttle 124.

An electrode sheet ES may be unwound from the electrode roll ER1 loaded onto the first unwinder 123UW of the first shuttle 123. The electrode sheet ES may be unwound by the first unwinder 123UW. When the electrode roll ER1 is loaded onto the second unwinder 124UW of the second shuttle 124, the processing of the electrode roll ER1 is similar to when the electrode roll ER1 is loaded onto the first unwinder 123UW of the first shuttle 123.

The electrode sheet ES may be processed by the main equipment 110. The main equipment 110 may be configured to perform, for example, a notching process. In the notching process, a plurality of main tabs may be formed on the electrode sheet ES. The main equipment 110 may be configured to perform, for example, a laser notching process.

The electrode sheet ES processed by the main equipment 110 may be wound by the first rewinder 133UW of the first shuttle 133. The electrode sheet ES processed by the main equipment 110 may also be wound by the second rewinder 134UW of the second shuttle 134. When processing by the main equipment 110 is completed, the second electrode roll ER2 may be separated from the electrode sheet ES. Completion of the second electrode roll ER2 may include, for example, achievement of a target winding amount.

The completed second electrode roll ER2 may be unloaded from the first rewinder 133UW of the first shuttle 133 by the hoist 132 and delivered to the automated logistics system 220. The automated logistics system 220 may deliver the second electrode roll ER2 to a subsequent process equipment or buffer.

The controller 111 may be configured to control the operation of various elements of the main equipment 110. The controller 111 may also be referred to as a process controller. The controller 111 may be configured to collect manufacturing history data MHD indicating control signals generated by the controller 111 and process events occurring from the main equipment 110.

The manufacturing history data MHD may indicate a state of the main equipment 110. The manufacturing history data MHD may include state values of the main equipment 110 and times temporally matched to the state values. The state value of the main equipment 110 may indicate that the main equipment 110 is in operation, or may include a loss code. The loss code may indicate a factor causing operation rate loss.

The controller 121 may be configured to control the hoist 122, the first shuttle 123, and the second shuttle 124 of the supply part 120. The controller 121 may also be referred to as a supply controller. The controller 121 may be configured to collect supply history data SHD indicating control signals generated by the controller 121 and logistics events occurring from the hoist 122, the first shuttle 123, and the second shuttle 124.

The supply history data SHD may indicate states of the hoist 122, the first shuttle 123, and the second shuttle 124. The supply history data SHD may include state values of the loading part 120 (i.e., respective state values of the hoist 122, the first shuttle 123, and the second shuttle 124) and times temporally matched to the state values. The state value of the loading part 120 may indicate that the loading part 120 is in operation, or may include a loss code. The loss code may indicate a factor causing operation rate loss.

The controller 131 may be configured to control the hoist 132, the first shuttle 133, and the second shuttle 134 of the discharge part 130.

Each of the controllers 111, 121, and 131 may be a PLC (Programmable Logic Controller). A PLC is a special form of microprocessor-based controller that uses programmable memory to store instructions and instantiates functions such as logic, sequencing, timing, counting, and arithmetic to control machines and processes. PLCs are easy to operate and program.

Each of the controllers 111, 121, and 131 may include power supplies, CPUs, input interfaces, output interfaces, communication interfaces, and memory devices. The power supply may be configured to supply power to other elements of each of the controllers 111, 121, and 131, such as the CPU, input interface, output interface, communication interface, and memory devices, for operation of each of the controllers 111, 121, and 131. The memory devices may include ROM (Read Only Memory) configured to store system programs such as operating systems and RAM (Random Access Memory) configured to store data such as user programs and status information of input and output devices, values of timers, counters, and other internal devices. The CPU may be configured to instantiate logic and control communication between modules that convert input signals into output operation signals. The CPU may operate based on system programs and user programs stored in the memory devices. The CPU may be configured to write or read inspection data and measurement data in the data area of the memory devices based on the system programs and user programs. Conditions or data of industrial equipment and production processes may be transmitted to the CPU through the input module. Results processed by the CPU may be transmitted to actuators through the output module. The communication interface may be configured to transmit and receive data of the controllers 111, 121, and 131.

However, the present disclosure is not limited thereto, and each of the controllers 111, 121, and 131 may include any one of a simple controller, a complex processor such as a microprocessor, CPU, GPU, etc., a processor configured by software, dedicated hardware, and firmware. Each of the controllers 111, 121, and 131 may be instantiated by, for example, a general-purpose computer or application-specific hardware such as DSP (Digital Signal Processor), FPGA (Field Programmable Gate Array), ASIC (Application Specific Integrated Circuit), etc.

The controller 121 may be configured to transmit the manufacturing history data MHD to the server 310. The controller 121 may be configured to transmit the supply history data SHD to the server 310. The controller 121 may be configured to transmit a roll request signal RRS to the server 310.

The server 310 may be configured to transmit the roll request signal RRS, the supply history data SHD, and the manufacturing history data MHD to the server 320. The server 310 may be a communication server. Unlike shown in FIGS. 1 and 2, the server 310 may be omitted, and the controllers 111 and 121 may be configured to communicate directly with the server 320.

According to exemplary embodiments, the server 320 may be a data processing system that supports various activities necessary for managing the manufacture of secondary batteries, such as work schedule management, work instructions, quality control, and work performance aggregation. According to exemplary embodiments, the server 320 may be an MES (Manufacturing Execution System). The server 320 may be configured to perform input, processing, output, and communication of data necessary for manufacturing secondary batteries.

According to other exemplary embodiments, the server 320 may be configured to store and process raw measurement data. The server 320 may manage the quality of processing of the electrode sheet ES by continuously monitoring the processing of the electrode sheet ES based on the measurement data. According to exemplary embodiments, the server 320 may be an SPC (Statistical Process Controller). The server 320 may identify problem conditions in a timely manner by collecting and analyzing manufacturing data in near real-time, and may provide alarms to operators before potential problems occur.

The server 320 may be configured to transmit a roll transfer command RTC to the automated logistics system 210 in response to the roll request signal RRS. The automated logistics system 210 may be configured to operate to deliver the first electrode roll ER1 to the supply part 120 in response to the roll transfer command RTC.

The server 320 may be configured to store the supply history data SHD and the manufacturing history data MHD. The server 320 may be configured to process the supply history data SHD and the manufacturing history data MHD. The server 320 may be configured to identify the cause of operation rate loss occurring in the main equipment 110 based on the supply history data SHD and the manufacturing history data MHD.

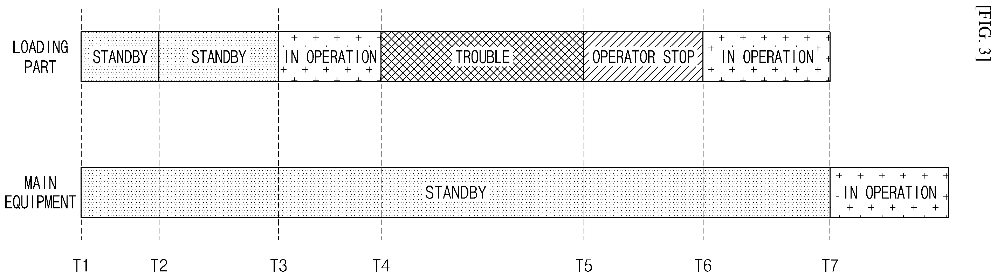

FIG. 3 illustrates an exemplary logistics event scenario including temporally aligned logistics events while the main equipment 110 is in a standby state.

Referring to FIGS. 1 to 3, during the period from the first time point T1 to the seventh time point T7, the main equipment 110 may be in a standby state. That is, the supply history data SHD while the main equipment 110 is in the standby state may be temporally ali gned.

At the first time point T1, the controller 121 may transmit the roll request signal RRS to the server 320. The server 320 may transmit the roll transfer command RTC to the automated logistics system, and in response, the automated logistics system 210 may deliver the first electrode roll ER1 having lot ID B to the supply part 120.

The first electrode roll ER1 having lot ID B may arrive at the supply part 120 at the second time point T2 following the first time point T1. Preparation of the first electrode roll ER1 having lot ID B may begin from the third time point T3 following the second time point T2. The preparation of the first electrode roll ER1 having lot ID B may include loading the first electrode roll ER1 having lot ID B onto one of the first shuttle 123 and the second shuttle 124.

For example, when the first electrode roll ER1 having lot ID A is loaded on the first shuttle 123 and being processed by the main equipment 110, the first electrode roll ER1 having lot ID B may be loaded on the second shuttle 124. Conversely, when the first electrode roll ER1 having lot ID A is loaded on the second shuttle 124 and being processed by the main equipment 110, the first electrode roll ER1 having lot ID B may be loaded on the first shuttle 123. Hereinafter, the case where the first electrode roll ER1 having lot ID B is loaded on the second shuttle 124 will be described.

At the fourth time point T4 following the third time point T3, a trouble may occur in the supply part 120. When a trouble occurs in the supply part 120, the controller 121 may be configured to generate a signal for generating an alarm. An operator may arrive at the site at the fifth time point T5 following the fourth time point T4 in response to the alarm, reset the alarm, and begin action. At the fifth time point T5, the supply part 120 may be stopped by operator manipulation.

At the sixth time point T6 following the fifth time point T5, action to resolve the trouble of the supply part 120 may be completed, and from the sixth time point T6, the supply part 120 may be in operation. At the seventh time point T7 following the sixth time point T6, the first electrode roll ER1 having lot ID B may be ready, and from the seventh time point T7, the main equipment 110 may be in operation.

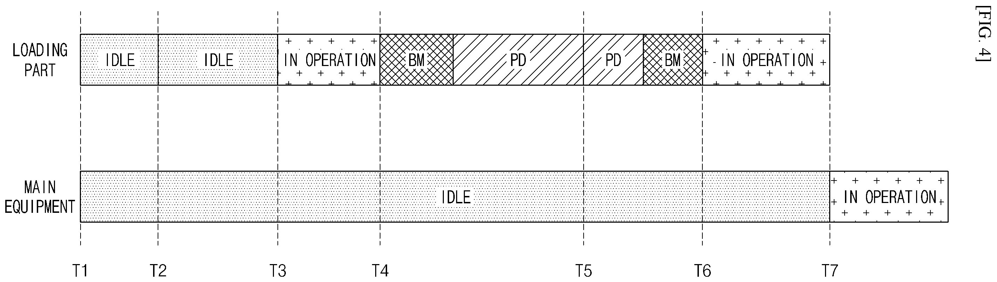

FIG. 4 illustrates supply history data SHD temporally matched to and temporally alig ned with an idle portion of manufacturing history data MHD.

The equipment state of the supply history data SHD is classified by loss code. The equipment state stored in the server 320 may be the loss code of FIG. 4, but is not limited thereto.

Referring to FIGS. 1 to 4, the standby state and operator stop state may be classified in the loss code as IDLE (idle), BM (Breakdown Maintenance), and PD (Process Down). The loss code may be determined by an operator, or may be determined by an algorithm or model configured to select a loss code.

Here, BM means work to repair a machine or equipment when it breaks down. In BM, repair and maintenance are performed only after a machine or system breaks down without preventive measures. PD is a situation where the production process is interrupted. PD is a term mainly used when the process stops due to machine failure, material shortage, manpower problems, or power and environmental factors.

The standby from the first time point T1 to the third time point T3 is not caused by a trouble of the supply part 120, so the loss code for the standby from the first time point T1 to the third time point T3 may be idle. The loss code of the main equipment 110 from the first time point T1 to the seventh time point T7 may be idle.

The loss code of the earlier part of the trouble between the fourth time point T4 and the fifth time point T5 may be BM, and the loss code of the subsequent part of the trouble between the fourth time point T4 and the fifth time point T5 may be PD.

The loss code of the earlier part of the operator stop between the fifth time point T5 and the sixth time point T6 may be PD, and the loss code of the subsequent part of the operator stop between the fifth time point T5 and the sixth time point T6 may be BM.

According to exemplary embodiments, the supply history data SHD and the manufacturing history data MHD are collected by the server 320, and the server 320 can distinguish between operation rate loss by the main equipment 110 and operation rate loss due to factors external to the main equipment 110 (i.e., the supply part 120) by temporally ali gning the supply history data SHD and the manufacturing history data MHD.

Furthermore, since the cause of operation rate loss due to the standby of the main equipment 110 from the first time point T1 to the seventh time point T7 can be identified, factors contributing to the operation rate loss can be identified and addressed.

The server 320 may be configured to determine the occupancy rate by loss code of the supply history data SHD matched to the idle time of the main equipment 110. The occupancy rate by loss code may be calculated as a ratio to the total idle time of the manufacturing history data MHD.

For example, if the standby from the first time point T1 to the seventh time point T7 accounts for 7% of the total standby of the main equipment 110, and 20% of the time between the first time point T1 and the seventh time point T7 is classified as idle loss code, 20% is classified as BM loss code, 30% is classified as PD loss code, and 30% is classified as in operation, about 2% of the standby of the main equipment 110 is determined to be due to the idle of the supply part 120, about 2% of the standby of the main equipment 110 is determined to be due to the BM of the supply part 120, and about 3% of the standby of the main equipment 110 may be determined to be due to the PD of the supply part 120.

### (Second embodiment)

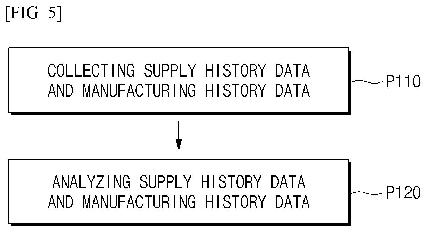

FIG. 5 is a flowchart illustrating a method for manufacturing a secondary battery according to exemplary embodiments.

Referring to FIGS. 1 to 5, at P110, supply history data SHD and manufacturing history data MHD may be collected. The supply history data SHD may be collected by the controller 121 and transmitted to the server 320. The manufacturing history data MHD may be collected by the controller 111 and transmitted to the server 320.

Subsequently, at P120, the supply history data SHD and the manufacturing history data MHD may be analyzed. The supply history data SHD and the manufacturing history data MHD may be analyzed by the server 320. The analysis of the supply history data SHD and the manufacturing history data MHD may include determining a portion of the supply history data SHD that temporally matches the idle time of the manufacturing history data MHD, and temporally aligning the portion of the supply history data SHD that temporally matches the idle time of the manufacturing history data MHD. The analysis of the supply history data SHD and the manufacturing history data MHD may include determining the loss code of the supply history data SHD temporally matched to the idle time of the manufacturing history data MHD and the occupancy rate by loss code.

According to exemplary embodiments, in addition to identifying operation rate loss due to the supply part 120, which is a factor external to the main equipment 110, insights into detailed factors and occurrence patterns of operation rate loss caused by the supply part 120 can be provided. These insights enable preventive maintenance or predictive maintenance, thereby improving the yield, reliability, and throughput of secondary battery manufacturing.

The present disclosure has been described in more detail above with reference to the drawings and embodiments. However, it is to be understood that the configurations shown in the drawings or embodiments described herein are only one embodiment of the disclosure and do not represent all of the technical ideas of the disclosure, and that there may be various equivalents and modifications that may be substituted for them at the time of filing the present application.

## Claims

1. A method for manufacturing a secondary battery comprising:
a step of collecting supply history data and manufacturing history data; and
a step of analyzing the supply history data and the manufacturing history data, wherein
the manufacturing history data indicates a state of main equipment configured to perform a manufacturing process, and
the supply history data indicates a state of a supply part configured to supply electrode rolls to the main equipment.

2. The method for manufacturing a secondary battery of claim 1, wherein
the step of analyzing the supply history data and the manufacturing history data comprises determining a portion of the supply history data that temporally matches idle time of the manufacturing history data.

3. The method for manufacturing a secondary battery of claim 1, wherein
the step of analyzing the supply history data and the manufacturing history data comprises determining an occupancy rate by loss code of the manufacturing history data temporally matched to idle time of the manufacturing history data.

4. The method for manufacturing a secondary battery of claim 3, wherein
the occupancy rate is calculated as a ratio to total idle time of the manufacturing history data.

5. A secondary battery manufacturing system comprising:
a secondary battery manufacturing equipment;
an automated logistics system configured to deliver electrode rolls to the secondary battery manufacturing equipment; and
a server, wherein
the secondary battery manufacturing equipment comprises a supply part configured to process the electrode rolls and to supply the electrode rolls delivered by the main equipment and the automated logistics system, wherein
the main equipment comprises a process controller configured to collect manufacturing history data indicating a state of the main equipment and to transmit the manufacturing history data to the server, wherein
the supply part comprises a supply controller configured to collect supply history data indicating a state of the main equipment and to transmit the supply history data to the server.

6. The secondary battery manufacturing system of claim 5, wherein
the supply part comprises a first shuttle comprising a first unwinder, a second shuttle comprising a second unwinder, and a hoist configured to lift the electrode roll from the automated logistics system and load the electrode roll onto one of the first and second unwinders.

7. The secondary battery manufacturing system of claim 6, wherein
the supply controller is configured to control the first shuttle, the second shuttle, and the hoist.

8. The secondary battery manufacturing system of claim 5, wherein
the server is a Manufacturing Execution System MES.

9. The secondary battery manufacturing system of claim 5, wherein
the server is configured to store the supply history data and the manufacturing history data.

10. The secondary battery manufacturing system of claim 5, wherein
the server is configured to analyze the supply history data and the manufacturing history data.

11. The secondary battery manufacturing system of claim 10, wherein
analyzing the supply history data and the manufacturing history data comprises determining a portion of the supply history data that temporally matches idle time of the manufacturing history data.

12. The secondary battery manufacturing system of claim 10, wherein
analyzing the supply history data and the manufacturing history data comprises determining an occupancy rate by loss code of the manufacturing history data temporally matched to idle time of the manufacturing history data.

13. The secondary battery manufacturing system of claim 12, wherein
the occupancy rate is calculated as a ratio to total idle time of the manufacturing history data.
